# EUROPÄISCHE PATENTSCHRIFT

(11) **EP 3 740 358 B1**
(45) Veröffentlichungstag und Bekanntmachung des Hinweises auf die Patenterteilung: **24.07.2024**
(21) Anmeldenummer: 19700668.7
(22) Anmeldetag: 11.01.2019
(51) Int. Cl.: B25J 19/06, B25J 19/02, B25J 9/16

(54) **ÜBERWACHUNG EINES ARBEITSBEREICHS EINER ROBOTERANORDNUNG**
MONITORING A WORKING REGION OF A ROBOT ARRANGEMENT
SURVEILLANCE D'UNE ZONE DE TRAVAIL D'UN ENSEMBLE ROBOTIQUE

(30) Priorität: 19.01.2018 DE 102018200860
(43) Veröffentlichungstag der Anmeldung: 25.11.2020
(73) Patentinhaber: KUKA Deutschland GmbH, 86165 Augsburg (DE)
(72) Erfinder: KOGAN, Yevgen, 86152 Augsburg (DE)
(74) Vertreter: Oelke, Jochen
(86) Internationale Anmeldenummer: PCT/EP2019/050613
(87) Internationale Veröffentlichungsnummer: WO 2019/141592

(56) Entgegenhaltungen:
- WO-A1-2017/091296
- DE-A1- 102005 003 827
- DE-A1- 102010 005 708
- DE-A1- 102010 007 025
- DE-A1- 102016 004 902
- DE-A1- 102016 007 520
- DE-A1- 102016 120 559

## Beschreibung

Die vorliegende Erfindung betrifft eine Überwachungsvorrichtung und ein Verfahren zum Überwachen eines Arbeitsbereichs einer Roboteranordnung mit wenigstens einem Roboter sowie ein System und ein Computerprogrammprodukt zur Durchführung des Verfahrens.

Die DE 102005003827 A1 offenbart eine Vorrichtung und ein Verfahren zur Kooperation zwischen einem Menschen und einer Robotereinheit an einem Arbeitsplatz, wobei zwei voneinander beabstandete und ggf. bewegliche Sensoreinheiten, z.B. Laserscanner oder Lichtschranken vorgesehen sind. Die Annäherung einer Person an den Arbeitsplatz kann dabei dadurch erfasst werden, dass die Person zunächst die erste und dann die zweite Sensoreinheit auslöst, wobei die zweite Sensoreinheit einen geringeren Abstand zum Arbeitsplatz hat wie die erste Sensoreinheit.

Die DE 102010007025 A1 offenbart ein Verfahren zur Überwachung eines Manipulatorraumes einer Mobileinheit mit Manipulator durch geeignete Umgebungserfassungseinrichtungen, z.B. Laserscanner, wobei die Grenze des zu überwachenden Manipulatorraumes durch eine Steuerung vorgegeben wird. Bei der Vorgabe des Manipulatorraumes wird die vorab erfasste Umgebung, um den Standort der Mobileinheit, sowie die Kinematik des Manipulators mitberücksichtigt.

Die DE 102010005708 A1 offenbart ein Produktionssystem zur Mensch-Roboter-Kollaboration, bei dem verschiedene Bereiche vorgegeben sind, die entweder ausschließlich durch den Menschen, durch den Roboter oder in Kollaboration durch beide genutzt werden. Die verschiedenen Bereiche werden durch Überwachungssensorik überwacht.

Die DE 102016007520 A1 offenbart eine Roboteranordnung mit Sicherheitssteuerung zur Mensch-Roboter-Kollaboration, bei der die Roboteranordnung unter anderem auf Basis eines Abstandes zwischen einem Hindernis und der Roboteranordnung überwacht wird. Zur Überwachung wird der Abstand des gegebenenfalls beweglichen Hindernisses, wie einer Person im Arbeitsraum der Roboteranordnung mittels eines Abstandssensors, z.B. eines Radarsensors überwacht.

Die DE 102016004902 A1 offenbart ein Verfahren zum Überwachen einer potentiellen Kollision eines Roboters mit einem beweglichen Objekt durch das Ermitteln eines kinetischen Parameters des Objekts und der Bestimmung, ob sich durch diesen kinetischen Parameter ein Kollisionsrisiko für das bewegende Objekt mit dem Roboter ergibt. Zur Überwachung und Ermittlung des kinetischen Parameters können Sensoren auf Basis von elektromagnetischer Strahlung verwendet werden. Weiterhin können optische Sensoren verwendet werden, um Verzerrung eines vorgegebenen in den Überwachungsraum ausgestrahlten Musters zu detektieren.

Die DE102016120559A1 offenbart ein Robotersteuerungssystem bei dem der Abstand einer Person von dem Roboter mittels eines Laserscanners erfasst wird und in Abhängigkeit von vorgegebenen Abstandsschwellwerten die Bewegung des Roboters beschränkt, bzw. gestoppt wird, je näher die Person dem Roboter kommt.

Die WO2017/091296A1 offenbart Systeme und Verfahren zur Festlegung von Sicherheitsregeln für Robotergeräte. Die Rechenvorrichtung bestimmt Anwesenheitsinformationen und Akteurstypinformationen über alle Akteure, die in einem vorgegebenen Bereich einer Umgebung vorhanden sind, unter Verwendung eines oder mehrerer Sensoren; bestimmt eine bestimmte Sicherheitsklassifizierung des vorgegebenen Bereichs auf der Grundlage der Anwesenheits- und Akteurstypinformationen; und nach der Bestimmung der bestimmten Sicherheitsklassifizierung für den vorgegebenen Bereich, Bereitstellung einer Sicherheitsregel für den Betrieb innerhalb des vorgegebenen Bereichs für eine in der Umgebung arbeitende Robotervorrichtung, wobei die Sicherheitsregel der bestimmten Sicherheitsklassifizierung entspricht.

Aufgabe der vorliegenden Erfindung ist es, die Überwachung eines Arbeitsbereichs einer Roboteranordnung, die wenigstens einen Roboter aufweist, zu verbessern.

Diese Aufgabe wird durch eine Überwachungsvorrichtung und ein Verfahren nach den unabhängigen Ansprüchen gelöst. Ansprüche 8, 9 stellen ein System bzw.

Computerprogrammprodukt zur Durchführung eines hier beschriebenen Verfahrens unter Schutz, die Unteransprüche betreffen vorteilhafte Weiterbildungen.

Nach einer Ausführung der vorliegenden Erfindung weist eine Überwachungsvorrichtung zum Überwachen eines Arbeitsbereichs einer Roboteranordnung, welche einen oder mehrere Roboter aufweist,
- eine Erfassungseinrichtung, die einen ein- oder mehrdimensionalen Parameter eines Objektes bei bzw. infolge von einem Penetrieren einer Grenzflächenanordnung, die eine oder mehrere Grenzflächen aufweist, erfasst bzw. hierzu eingerichtet ist bzw. verwendet wird; und
- ein Steuermittel auf, das selektiv eine von zwei oder mehr verschiedenen Sicherheitsreaktionen der Roboteranordnung auf Basis bzw. in Abhängigkeit von dem erfassten Parameter auslöst bzw. hierzu eingerichtet ist bzw. verwendet wird
und die Erfassungseinrichtung zwei oder mehr Lichtvorhänge aufweist, die unterschiedliche Auflösungen aufweisen.

Hierdurch kann in einer Ausführung in vorteilhafter, insbesondere differenzierter, insbesondere abgestufter, Weise auf, insbesondere unterschiedliches, Penetrieren der Grenzflächenanordnung, insbesondere auf Penetrieren der Grenzflächenanordnung durch unterschiedliche Objekte, reagiert werden.

So kann in einer Ausführung eine einschneidendere Sicherheitsreaktion ausgelöst werden, falls eine Penetration eines Lichtvorhangs durch einen Gegenstand erfasst wird, der mindestens die Größe eines (durchschnittlichen) menschlichen Kopfes, insbesondere einen Durchmesser von wenigstens 20 cm, insbesondere wenigstens 25 cm, aufweist, und eine demgegenüber weniger einschneidende Sicherheitsreaktion, die einen Arbeitsablauf der Roboteranordnung weniger stört, falls eine Penetration des Lichtvorhangs durch einen Gegenstand erfasst wird, der höchstens die Größe einer (durchschnittlichen) menschlichen Hand, insbesondere einen Durchmesser von höchstens 19 cm, insbesondere höchstens 15 cm, aufweist, da in diesem Fall das Risiko einer lebensgefährlichen (Kopf)Verletzung geringer ist.

Der bzw. ein oder mehrere Roboter der Roboteranordnung weisen in einer Ausführung (jeweils) einen Roboterarm mit wenigstens vier, insbesondere wenigstens sechs, in einer Ausführung wenigstens sieben Gelenken, insbesondere Dreh- und/oder Schubgelenken, auf, die in einer Ausführung, insbesondere elektrisch, insbesondere elektromotorisch, hydraulisch und/oder pneumatisch, aktuierbar sind, insbesondere aktuiert werden bzw. hierzu eingerichtet sind.

Aufgrund ihrer komplexen Bewegungen kann die vorliegende Erfindung mit besonderem Vorteil zur Überwachung solcher Roboter(anordnungen) verwendet werden.

In einer Ausführung kann das Objekt ein(en) Gegenstand und/oder eine Person oder ein(en) Teil hiervon, insbesondere ein(en) Körperteil, insbesondere ein(en) Kopf, eine Hand oder dergleichen aufweisen, insbesondere sein, insbesondere wenigstens dessen minimale und/oder höchstens dessen maximale Größe aufweisen.

Dadurch können in einer Ausführung Personengefährdungen reduziert werden.

Die bzw. eine oder mehrere der Grenzfläche(n) der Grenzflächenanordnung sind in einer Ausführung ganz oder abschnittsweise eben und/oder, insbesondere konvex und/oder konkav, gekrümmt, und/oder zusammenhängend und/oder zweidimensional. In einer Ausführung sind die bzw. eine oder mehrere Grenzfläche(n) ganz oder teilweise innerhalb und/oder außerhalb eines, insbesondere maximalen, Arbeitsbereichs der Roboteranordnung angeordnet und/oder begrenzen diesen.

Solche Grenzflächen sind besonders vorteilhaft zur Überwachung durch Erfassungseinrichtungen und/oder von Arbeitsbereichen von Robotern geeignet.

In einer Ausführung wird eine (erste) von den wenigstens zwei Sicherheitsreaktionen ausgelöst, falls der erfasste Parameter einen ersten Wert aufweist, und eine andere (zweite) von den wenigstens zwei Sicherheitsreaktionen ausgelöst, falls der erfasste Parameter einen hiervon verschiedenen zweiten Wert aufweist. In einer Weiterbildung wird eine von der einen und der anderen Sicherheitsreaktion verschiedene weitere (dritte) Sicherheitsreaktion von den dann wenigstens drei Sicherheitsreaktionen ausgelöst, falls der erfasste Parameter einen von dem ersten und zweiten Wert verschiedenen dritten Wert aufweist. Auf diese Weise kann in einer Ausführung in vorteilhafter, insbesondere differenzierter, insbesondere abgestufter, Weise auf Penetrieren der Grenzflächenanordnung durch Objekte unterschiedlicher Größe, an unterschiedlichen Stellen und/oder in unterschiedlichen Richtungen reagiert werden.

In einer Weiterbildung sind zwei oder mehr Koordinaten des dann mehrdimensionalen Parameters, insbesondere kumulativ bzw. "UND" oder disjunktiv bzw. "ODER", miteinander verknüpft.

In einer Ausführung wird somit eine (erste) von den wenigstens zwei Sicherheitsreaktionen ausgelöst, falls eine (erste) Koordinate des erfassten Parameters einen ersten (Koordinaten)Wert und eine weitere (zweite) Koordinate des erfassten Parameters einen weiteren ersten (Koordinaten)Wert aufweist, und eine andere (zweite) von den wenigstens zwei Sicherheitsreaktionen ausgelöst, falls (wenigstens) die eine (erste) Koordinate des erfassten Parameters einen von dem einen ersten (Koordinaten)Wert verschiedenen (Koordinaten)Wert oder die weitere (zweite) Koordinate des erfassten Parameters einen von dem weiteren ersten (Koordinaten)Wert verschiedenen (Koordinaten)Wert aufweist. So kann beispielsweise eine einschneidendere Sicherheitsreaktion ausgelöst werden, wenn das Objekt wenigstens eine vorgegebene Größe aufweist und in der Nähe eines Roboters die Grenzflächenanordnung penetriert, und eine demgegenüber weniger einschneidende Sicherheitsreaktion, falls das Objekt zwar wenigstens die vorgegebene Größe aufweist, aber die Grenzflächenanordnung nicht in der Nähe eines Roboters penetriert oder zwar die Grenzflächenanordnung in der Nähe eines Roboters penetriert, aber nicht wenigstens die vorgegebene Größe aufweist.

Zusätzlich oder alternativ wird in einer Ausführung eine (erste) von den wenigstens zwei Sicherheitsreaktionen ausgelöst, falls wenigstens eine (erste) Koordinate des erfassten Parameters einen ersten (Koordinaten)Wert oder wenigstens eine weitere (zweite) Koordinate des erfassten Parameters einen weiteren ersten (Koordinaten)Wert aufweist, und eine andere (zweite) von den wenigstens zwei Sicherheitsreaktionen ausgelöst, falls weder die eine (erste) Koordinate des erfassten Parameters den einen ersten (Koordinaten)Wert noch die weitere (zweite) Koordinate des erfassten Parameters den weiteren ersten (Koordinaten)Wert aufweist. So kann beispielsweise eine einschneidendere Sicherheitsreaktion ausgelöst werden, wenn wenigstens das Objekt wenigstens eine vorgegebene Größe aufweist oder in der Nähe eines Roboters die Grenzflächenanordnung penetriert, und eine demgegenüber weniger einschneidende Sicherheitsreaktion, falls das Objekt weder wenigstens die vorgegebene Größe aufweist noch die Grenzflächenanordnung in der Nähe eines Roboters penetriert.

In einer Ausführung erfasst die Erfassungseinrichtung den Parameter optisch, insbesondere mithilfe von sichtbarem und/oder unsichtbarem, insbesondere ultraviolettem, Licht, insbesondere Laserlicht, akustisch, insbesondere mithilfe von Ultraschall, kapazitiv, magnetisch und/oder taktil oder berührungslos bzw. ist hierzu eingerichtet. Durch eine solche Erfassungseinrichtung kann in einer Ausführung die Erfassung verbessert, insbesondere deren Präzision und/oder Zuverlässigkeit erhöht, und/oder eine Beeinflussung einer Arbeitsumgebung der Roboteranordnung reduziert und/oder ein Erfassungsbereich vergrößert werden. Insbesondere kann durch eine berührungslose, insbesondere optische oder akustische, Erfassung in einer Ausführung eine Beeinträchtigung einer Arbeitsumgebung der Roboteranordnung reduziert und/oder ein Erfassungsbereich vergrößert, durch eine taktile Erfassung deren Sicherheit erhöht werden.

In einer Ausführung erfasst die Erfassungseinrichtung den Parameter auf Basis bzw. in Abhängigkeit von einem (erfassten bzw. Erfassen eines) Penetrieren(s) unterschiedlicher Bereiche der Grenzflächenanordnung bzw. ist hierzu eingerichtet bzw. wird hierzu verwendet.

Dabei kann in einer Ausführung die Erfassungseinrichtung bei einem (erfassten bzw. Erfassen eines) Penetrieren(s) unterschiedlicher Bereiche und/oder einer unterschiedlichen Anzahl von Bereichen (jeweils) unterschiedliche Parameterwerte erfassen, insbesondere bei einem (erfassten bzw. Erfassen eines) Penetrieren(s) eines ersten Bereichs einen ersten Parameterwert und bei einem (erfassten bzw. Erfassen eines) Penetrieren(s) eines hiervon verschiedenen zweiten Bereichs einen zweiten Parameterwert und/oder bei einem (erfassten bzw. Erfassen eines) Penetrieren(s) höchstens einer vorgegebenen Anzahl von Bereichen einen ersten Parameterwert und bei einem (erfassten bzw. Erfassen eines) Penetrieren(s) wenigstens einer hiervon verschiedenen, insbesondere größeren, Anzahl einen zweiten Parameterwert und/oder bei einer bei einem (erfassten bzw. Erfassen eines) Penetrieren(s) von Bereichen in einer ersten Reihenfolge einen ersten Parameterwert und bei einem (erfassten bzw. Erfassen eines) Penetrieren(s) von Bereichen in einer hiervon verschiedenen, insbesondere umgekehrten, Reihenfolge einen zweiten Parameterwert.

In einer Weiterbildung sind die unterschiedlichen Bereiche streifenförmiger und/oder gegeneinander, insbesondere innerhalb einer Grenzfläche und/oder quer hierzu, versetzt und/oder unterschiedlich groß und/oder unterschiedlich konturiert.

Durch ein Erfassen auf Basis unterschiedlicher Bereiche kann in einer Ausführung eine räumlich, kinematisch und/oder objekt(größen)abhängig differenzierte Sicherheitsreaktion ausgelöst werden. Dabei können streifenförmige Bereiche vorteilhaft, insbesondere voneinander abgegrenzt, erfasst werden. Durch ein Erfassen auf Basis gegeneinander versetzter Bereiche kann in einer Ausführung ein Ort, eine Geschwindigkeit und/oder eine Größe des Objekts vorteilhaft erfasst und/oder eine Sicherheit erhöht werden. Durch ein Erfassen auf Basis unterschiedlich großer Bereiche kann in einer Ausführung insbesondere eine Größe des Objekts vorteilhaft erfasst und/oder die Erfassung an Umgebungsbedingungen angepasst werden. Durch ein Erfassen auf Basis unterschiedlich konturierter Bereiche kann in einer Ausführung insbesondere eine Form und/oder Größe des Objekts vorteilhaft erfasst und/oder die Erfassung an Umgebungsbedingungen angepasst werden.

In einer Weiterbildung erfasst die Erfassungseinrichtung den Parameter auf Basis bzw. in Abhängigkeit von einem (erfassten bzw. Erfassen eines) Penetrieren(s) von zwei oder mehr gegeneinander versetzten Grenzflächen der Grenzflächenanordnung bzw. ist hierzu eingerichtet bzw. wird hierzu verwendet. Hierdurch kann insbesondere eine Bewegung und/oder Größe des Objekts vorteilhaft erfasst und eine danach differenzierte Sicherheitsreaktion ausgelöst werden.

Dabei kann in einer Ausführung die Erfassungseinrichtung bei einem (erfassten bzw. Erfassen eines) Penetrieren(s) von wenigstens zwei gegeneinander versetzten Bereichen, insbesondere Grenzflächen, einen ersten Parameterwert und bei einem (erfassten bzw. Erfassen eines) Penetrieren(s) von höchstens einem dieser Bereiche bzw. Grenzflächen einen zweiten Parameterwert und/oder bei einem ersten zeitlichen Abstand zwischen einem (erfassten bzw. Erfassen eines) Penetrieren(s) von wenigstens zwei gegeneinander versetzten Bereichen einen ersten Parameterwert und bei einem hiervon verschiedenen, insbesondere größeren, zweiten zeitlichen Abstand zwischen einem (erfassten bzw. Erfassen eines) Penetrieren(s) dieser Bereiche einen zweiten Parameterwert erfassen.

In einer bevorzugten Ausführung sind die zwei oder mehr Lichtvorhänge gegeneinander versetzt und/oder verdreht. Hierdurch können in einer Ausführung Größe, Position und/oder Geschwindigkeit eines penetrierenden Objektes vorteilhaft erfasst werden.

Der Parameter kann in einer Ausführung ein- oder mehrdimensional sein bzw. eine oder mehrere Parameterkoordinaten aufweisen. In einer Ausführung kann der Parameter bzw. sein Wert bzw. seine Koordinate(n) von einer Größe und/oder Geschwindigkeit und/oder einer Position des Objekts, insbesondere einem Abstand des Objekts relativ zu der Roboteranordnung, abhängen, insbesondere diese(r) sein. Hierdurch können in einer Ausführung besonders vorteilhaft jeweils spezifische bzw. adäquate Sicherheitsreaktionen ausgelöst werden.

In einer Ausführung können die zwei oder mehr verschiedenen Sicherheitsreaktionen unterschiedliche, insbesondere zulässige bzw. maximale, Geschwindigkeiten, insbesondere Geschwindigkeitsbegrenzungen, unterschiedliche Posen und/oder Trajektorien und/oder unterschiedliche Stillsetzungen der Roboteranordnung und/oder unterschiedliche Warnsignale eines Signalmittels der Überwachungsvorrichtung aufweisen, insbesondere sein. So kann insbesondere eine (einschneidendere) erste Sicherheitsreaktion eine niedrigere zulässige Geschwindigkeit, das Anfahren einer Sicherheitspose und/oder ein Stillsetzen aufweisen, und eine (demgegenüber weniger einschneidende) zweite Sicherheitsreaktion eine höhere zulässige Geschwindigkeit und/oder Anfahren einer Sicherheitspose bzw. kein oder ein langsameres Stillsetzen. Zusätzlich oder alternativ kann eine (einschneidendere) erste Sicherheitsreaktion eine Ausgabe eines akustischen und/oder optischen Warnsignals aufweisen und eine (demgegenüber weniger einschneidende) zweite Sicherheitsreaktion eine Ausgabe eines anderen, insbesondere leiseren, akustischen Warnsignals und/oder eines anderen, insbesondere weniger auffälligen, optischen Warnsignals oder dergleichen.

Somit wird in einer Ausführung eine, insbesondere maximale bzw. zulässige, Geschwindigkeit der Roboteranordnung stärker reduziert, in einer Ausführung die Roboteranordnung stillgesetzt, wenn die Grenzflächenanordnung durch ein Objekt, das wenigstens eine vorgegebene Mindestgröße und/oder wenigstens eine vorgegebene Mindestgeschwindigkeit, insbesondere Bewegungsrichtung auf den Arbeitsbereich zu, aufweist, und/oder in einem Bereich, der höchstens einen vorgegebene Maximalabstand zur Roboteranordnung aufweist, penetriert bzw. dies, insbesondere mithilfe wenigstens eines, insbesondere wenigstens zweier Lichtvorhänge, insbesondere mit unterschiedlicher Auflösung, bzw. ein entsprechender Parameter(wert) erfasst wird, und die Geschwindigkeit der Roboteranordnung demgegenüber weniger (stark) reduziert, in einer Ausführung die Roboteranordnung nicht stillgesetzt, wenn die Grenzflächenanordnung durch ein Objekt, das höchstens eine vorgegebene Maximalgröße und/oder höchstens eine vorgegebene Maximalgeschwindigkeit, insbesondere Bewegungsrichtung von dem Arbeitsbereich fort, aufweist, und/oder in einem Bereich, der wenigstens einen vorgegebene Mindestabstand zur Roboteranordnung aufweist, penetriert bzw. dies, insbesondere mithilfe wenigstens eines, insbesondere wenigstens zweier Lichtvorhänge, insbesondere mit unterschiedlicher Auflösung, bzw. ein entsprechender Parameter(wert) erfasst wird, wobei in einer Ausführung wenigstens zwei dieser Bedingungen kumulativ erfüllt sein müssen und in einer Ausführung bereits eine dieser Bedingungen ausreichen kann.

Nach einer Ausführung der vorliegenden Erfindung weist ein Verfahren zum Überwachen eines bzw. des Arbeitsbereichs einer bzw. der Roboteranordnung mit einem oder mehreren Robotern die Schritte auf:
- Erfassen eines bzw. des ein- oder mehrdimensionalen Parameters eines Objektes bei bzw. infolge von einem Penetrieren einer bzw. der Grenzflächenanordnung, die eine oder mehrere Grenzflächen aufweist; und
- selektives Auslösen einer von zwei oder mehr verschiedenen Sicherheitsreaktionen der Roboteranordnung auf Basis bzw. in Abhängigkeit von dem erfassten Parameter,
mithilfe der hier beschriebenen Überwachungsvorrichtung.

Entsprechend wird in einer Ausführung der Parameter, insbesondere durch die Erfassungseinrichtung, optisch, akustisch, kapazitiv, magnetisch und/oder taktil oder berührungslos, erfasst, insbesondere mithilfe wenigstens eines Lichtvorhangs.

Zusätzlich oder alternativ wird in einer Ausführung der Parameter auf Basis eines (erfassten bzw. Erfassens eines) Penetrierens unterschiedlicher, insbesondere streifenförmiger und/oder gegeneinander versetzter und/oder unterschiedlich großer und/oder unterschiedlich konturierter, Bereiche der Grenzflächenanordnung, insbesondere eines (erfassten bzw. Erfassens eines) Penetrierens wenigstens zweier gegeneinander versetzter Grenzflächen der Grenzflächenanordnung erfasst, insbesondere mithilfe wenigstens zweier Lichtvorhänge, die gegeneinander versetzt und/oder verdreht sind und/oder unterschiedliche Auflösungen aufweisen.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere die Roboteranordnung bzw. deren Arbeitsbereich betreiben bzw. überwachen kann. Ein Computerprogrammprodukt kann in einer Ausführung ein, insbesondere nicht-flüchtiges, Speichermedium zum Speichern eines Programms bzw. mit einem darauf gespeicherten Programm aufweisen, insbesondere sein, wobei ein Ausführen dieses Programms ein System bzw. eine Überwachungsvorrichtung, insbesondere einen Computer, dazu veranlasst, ein hier beschriebenes Verfahren bzw. einen oder mehrere seiner Schritte auszuführen.

In einer Ausführung werden ein oder mehrere, insbesondere alle, Schritte des Verfahrens vollständig oder teilweise automatisiert durch die Überwachungsvorrichtung bzw. ihre Einrichtungen durchgeführt.

Weitere Vorteile und Merkmale ergeben sich aus den Unteransprüchen und den Ausführungsbeispielen. Hierzu zeigt, teilweise schematisiert:
- Fig. 1:: ein System mit einer Roboteranordnung und einer Überwachungsvorrichtung zum Überwachen eines Arbeitsbereichs der Roboteranordnung nach einer Ausführung der vorliegenden Erfindung;
- Fig. 2:: ein Objekt bei einem Penetrieren einer Grenzflächenanordnung mit zwei Grenzflächen;
- Fig. 3:: ein anderes Objekt bei einem Penetrieren der Grenzflächenanordnung; und
- Fig. 4:: ein Verfahren zum Überwachen des Arbeitsbereichs nach einer Ausführung der vorliegenden Erfindung.

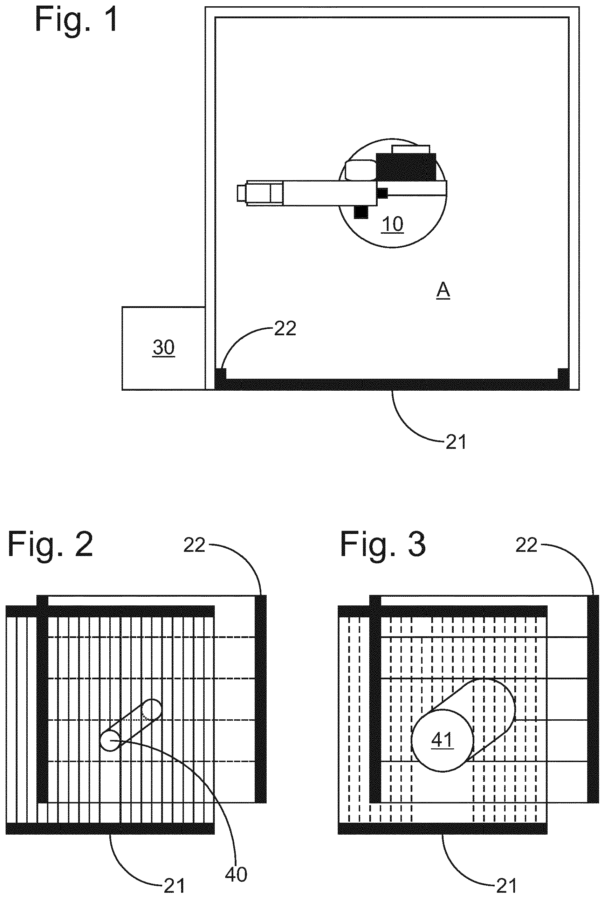

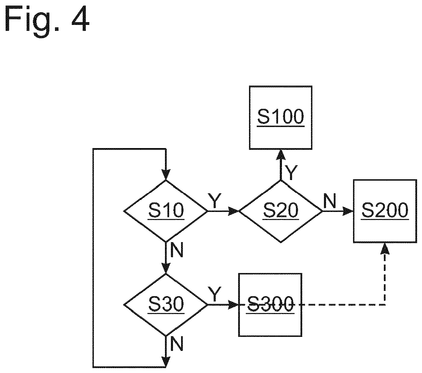

Fig. 1 zeigt ein System mit einer Roboteranordnung in Form eines Roboters 10 und einer Überwachungsvorrichtung zum Überwachen eines Arbeitsbereichs A der Roboteranordnung nach einer Ausführung der vorliegenden Erfindung, die zwei um 90° gegeneinander verdrehte Lichtvorhänge 21, 22 sowie eine (Roboter)Steuerung 30 aufweist, welche ein nachfolgend mit Bezug auf Fig. 4 erläutertes Verfahren zum Überwachen des Arbeitsbereichs A nach einer Ausführung der vorliegenden Erfindung durchführt.

In einem Schritt S10 wird geprüft, ob ein Penetrieren einer ersten Grenzfläche, die dem Erfassungsbereich des in Fig. 1 unteren bzw. in Fig. 2, 3 vorderen Lichtvorhangs 21 entspricht, erfasst worden ist.

Ist dies der Fall (S10: "Y"), wird in einem Schritt S20 geprüft, ob (auch) ein Penetrieren einer zweiten Grenzfläche, die dem Erfassungsbereich des in Fig. 1 oberen bzw. in Fig. 2, 3 hinteren Lichtvorhangs 22 entspricht, erfasst worden ist.

Ist (auch) dies der Fall (S20: "Y"), löst die Steuerung 30 in einem Schritt S100 eine erste Sicherheitsreaktion aus, die ein Stillsetzen des Roboters 10 in einer sicheren Stillstandspose und die Ausgabe eines akustischen und optischen Warnsignals umfasst.

Wird in Schritt S20 hingegen festgestellt, dass kein Penetrieren der zweiten Grenzfläche erfasst worden ist (S20: "N"), löst die Steuerung 30 in einem Schritt S200 eine zweite Sicherheitsreaktion aus, die (nur) ein sicheres Reduzieren der Geschwindigkeit des Roboters 10 und die Ausgabe eines anderen optischen Warnsignals umfasst.

Wird in Schritt S10 festgestellt, dass kein Penetrieren der ersten Grenzfläche erfasst worden ist (S10: "N"), wird in einem Schritt S30 geprüft, ob (trotzdem) ein Penetrieren der zweiten Grenzfläche erfasst worden ist.

Ist dies der Fall (S30: "Y"), löst die Steuerung 30 in einem Schritt S300 eine dritte Sicherheitsreaktion in Form der Ausgabe eines anderen optischen Warnsignals aus und führt im Übrigen einen Arbeitsprozess des Roboters 10 unverändert fort.

In einer gestrichelt angedeuteten Abwandlung kann die Steuerung 30 in diesem Fall (S30: "Y") ebenfalls die zweite Sicherheitsreaktion auslösen. Somit wird in der Abwandlung die erste Sicherheitsreaktion ausgelöst, wenn beide Lichtvorhänge unterbrochen werden bzw. dies erfasst wird (S10: "Y" UND S20: "Y"), und die zweite Sicherheitsreaktion ausgelöst, wenn nur einer der beiden Lichtvorhänge unterbrochen bzw. dies erfasst wird (S20: "N" ODER S30: "Y").

Wird in Schritt S30 hingegen festgestellt, dass (auch) kein Penetrieren der zweiten Grenzfläche erfasst worden ist (S30: "N"), kehrt das Verfahren bzw. die Steuerung 30 zu Schritt S10 zurück.

Fign. 2, 3 verdeutlichen dies: in Fig. 2 ist eine Situation gezeigt, in der ein kleine(re)s Objekt 40, beispielsweise eine menschliche Hand oder dergleichen, von außen (von unten in Fig. 1 bzw. von vorne in Fig. 2) in den überwachten Arbeitsbereich A des Roboters 10 eindringt.

Aufgrund einer geringeren Auflösung des zweiten Lichtvorhangs 22, die in Fig. 2 gestrichelt durch weiter voneinander beabstandete Lichtstrahlen schematisch angedeutet ist, wird in diesem Fall die zweite Sicherheitsreaktion ausgelöst (S200), da eine potentielle Verletzung der Hand durch den Roboter weniger gefährlich ist.

In Fig. 3 ist eine Situation gezeigt, in der ein größeres Objekt 41, beispielsweise ein menschlicher Kopf oder dergleichen, von außen (von unten in Fig. 1 bzw. von vorne in Fig. 3) in den überwachten Arbeitsbereich A des Roboters 10 eindringt. Aufgrund seiner Größe wird in diesem Fall auch ein Penetrieren der zweiten Grenzfläche durch den zweiten Lichtvorhang 22 erfasst. Daher wird die erste Sicherheitsreaktion ausgelöst (S100), da eine potentielle Verletzung des Kopfes durch den Roboter gefährlicher ist.

Die dritte Sicherheitsreaktion (S300) kann beispielsweise aufgrund eines Bauteils ausgelöst werden, dass aus dem Arbeitsbereich A des Roboters in den Erfassungsbereich des zweiten Lichtvorhangs 22 hineinrollt und von diesem erfasst wird.

Obwohl in der vorhergehenden Beschreibung exemplarische Ausführungen erläutert wurden, sei darauf hingewiesen, dass eine Vielzahl von Abwandlungen möglich ist.

So können in nicht dargestellten Abwandlungen insbesondere:
- der erste und zweite Lichtvorhang nicht gegeneinander versetzt und/oder nicht gegeneinander verdreht sein;
- zusätzlich ein dritter, noch feiner auflösender Lichtvorhang vorgesehen sein, wobei bei einem (erfassten) Penetrieren nur des Erfassungsbereichs dieses dritten Lichtvorhangs insbesondere die zweite, dritte oder eine hiervon verschiedene vierte Sicherheitsreaktion ausgelöst werden kann;
- die Größe eines penetrierendes Objekts statt durch zwei Lichtvorhänge unterschiedlicher Auflösung(en) auch durch einen einzigen Lichtvorhang oder eine andere Erfassungseinrichtung erfasst werden; und/oder
- die ausgelöste Sicherheitsreaktion zusätzlich oder alternativ auch vom Ort und/oder der Geschwindigkeit abhängen, an dem bzw. mit der eine Grenzfläche penetriert bzw. dies erfasst wird.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

### Bezugszeichenliste

- 10: Roboter(anordnung)
- 21, 22: Lichtvorhang (Erfassungseinrichtung)
- 30: (Roboter)Steuerung (Steuermittel)
- 40; 41: Objekt
- A: Arbeitsbereich

## Patentansprüche

1. Überwachungsvorrichtung zum Überwachen eines Arbeitsbereichs (A) einer Roboteranordnung mit wenigstens einem Roboter (10), die:
- eine Erfassungseinrichtung (21, 22) zum Erfassen eines Parameters eines Objektes (40; 41) bei einem Penetrieren einer Grenzflächenanordnung mit wenigstens einer Grenzfläche; und
- ein Steuermittel (30) zum selektiven Auslösen einer von wenigstens zwei verschiedenen Sicherheitsreaktionen der Roboteranordnung auf Basis des erfassten Parameters
aufweist **dadurch gekennzeichnet, dass** die Erfassungseinrichtung wenigstens zwei Lichtvorhänge (21, 22) aufweist, die unterschiedliche Auflösungen aufweisen.

2. Überwachungsvorrichtung nach Anspruch 1, **dadurch gekennzeichnet, dass** die Erfassungseinrichtung eine Erfassungseinrichtung zum optischen, akustischen, kapazitiven, magnetischen und/oder taktilen oder berührungslosen Erfassen des Parameters ist.

3. Überwachungsvorrichtung nach einem der vorhergehenden Ansprüche, **dadurch gekennzeichnet, dass** die Erfassungseinrichtung eine Erfassungseinrichtung zum Erfassen des Parameters auf Basis eines Penetrierens unterschiedlicher, insbesondere streifenförmiger und/oder gegeneinander versetzter und/oder unterschiedlich großer und/oder unterschiedlich konturierter, Bereiche der Grenzflächenanordnung, insbesondere eines Penetrierens wenigstens zweier gegeneinander versetzter Grenzflächen der Grenzflächenanordnung ist.

4. Überwachungsvorrichtung nach einem der vorhergehenden Ansprüche, **dadurch gekennzeichnet, dass** die wenigstens zwei Lichtvorhänge (21, 22) gegeneinander versetzt und/oder verdreht sind.

5. Überwachungsvorrichtung nach einem der vorhergehenden Ansprüche, **dadurch gekennzeichnet, dass** der Parameter von einer Größe, Geschwindigkeit und/oder Position des Objekts, insbesondere einem Abstand des Objekts relativ zu der Roboteranordnung, abhängt.

6. Überwachungsvorrichtung nach einem der vorhergehenden Ansprüche, **dadurch gekennzeichnet, dass** die wenigstens zwei verschiedenen Sicherheitsreaktionen unterschiedliche Geschwindigkeiten, Posen, Trajektorien und/oder Stillsetzungen der Roboteranordnung und/oder unterschiedliche Warnsignale eines Signalmittels der Überwachungsvorrichtung aufweisen.

7. Verfahren zum Überwachen eines Arbeitsbereichs einer Roboteranordnung mit wenigstens einem Roboter mithilfe der Überwachungseinrichtung nach einem der Ansprüche 1 bis 6, mit den Schritten:
- Erfassen eines Parameters eines Objektes bei einem Penetrieren einer Grenzflächenanordnung, die wenigstens eine Grenzfläche aufweist; und
- selektives Auslösen (S100, S200, S300) einer von wenigstens zwei verschiedenen Sicherheitsreaktionen der Roboteranordnung auf Basis des erfassten Parameters.

8. System mit einer Roboteranordnung mit wenigstens einem Roboter (10) und einer Überwachungsvorrichtung zum Überwachen eines Arbeitsbereichs (A) der Roboteranordnung nach einem der Ansprüche 1 bis 6.

9. Computerprogrammprodukt mit einem Programmcode, der auf einem von einem Computer lesbaren Medium gespeichert ist, zur Durchführung eines Verfahrens nach Anspruch 7.

## Claims

1. Monitoring apparatus for monitoring a work region (A) of a robot arrangement having at least one robot (10), which comprises:
- an acquisition device (21, 22) for acquiring a parameter of an object (40; 41) when an interface arrangement with at least one interface is penetrated; and
- a control means (30) for selectively triggering one of at least two different safety reactions of the robot arrangement on the basis of the acquired parameter,
**characterized in that** the acquisition device comprises at least two light curtains (21, 22) having different resolutions.

2. Monitoring apparatus according to Claim 1, **characterized in that** the acquisition device is an acquisition device for optical, acoustic, capacitive, magnetic and/or tactile or contactless acquisition of the parameter.

3. Monitoring apparatus according to either of the preceding claims, **characterized in that** the acquisition device is an acquisition device for acquiring the parameter on the basis of a penetration of different, in particular stripe-type and/or mutually offset and/or differently sized and/or differently contoured, regions of the interface arrangement, in particular a penetration of at least two mutually offset interfaces of the interface arrangement.

4. Monitoring apparatus according to any of the preceding claims, **characterized in that** the at least two light curtains (21, 22) are mutually offset and/or rotated relative to one another.

5. Monitoring apparatus according to any of the preceding claims, **characterized in that** the parameter is dependent on a size, speed and/or position of the object, in particular on a distance of the object relative to the robot arrangement.

6. Monitoring apparatus according to any of the preceding claims, **characterized in that** the at least two different safety reactions include different speeds, poses, trajectories and/or shutdowns of the robot arrangement and/or different warning signals from a signal means of the monitoring apparatus.

7. Method for monitoring a work region of a robot arrangement having at least one robot with the aid of the monitoring device according to any of Claims 1 to 6, comprising the steps of:
- acquiring a parameter of an object when an interface arrangement having at least one interface is penetrated; and
- selectively triggering (S100, S200, S300) one of at least two different safety reactions of the robot arrangement on the basis of the acquired parameter.

8. System with a robot arrangement having at least one robot (10) and a monitoring apparatus for monitoring a work region (A) of the robot arrangement according to any of Claims 1 to 6.

9. Computer program product with a program code, stored on a computer-readable medium, for carrying out a method according to Claim 7.

## Revendications

1. Dispositif de surveillance qui est destiné à surveiller une zone de travail (A) d'un ensemble de robots comprenant au moins un robot (10) et qui comporte :
- un module de détection (21, 22) destiné à détecter un paramètre d'un objet (40 ; 41) lors de la pénétration d'un ensemble d'interfaces comprenant au moins une interface ; et
- un moyen de commande (30) destiné à déclencher sélectivement une parmi au moins deux réactions de sécurité différentes de l'ensemble de robots sur la base du paramètre détecté,
**caractérisé en ce que** le module de détection comporte au moins deux rideaux de lumière (21, 22) qui ont des résolutions différentes.

2. Dispositif de surveillance selon la revendication 1, **caractérisé en ce que** le module de détection est un moule de détection destiné à détecter le paramètre par voie optique, acoustique, capacitive, magnétique et/ou tactile ou sans contact.

3. Dispositif de surveillance selon l'une des revendications précédentes, **caractérisé en ce que** le module de détection est un module de détection destiné à détecter le paramètre sur la base d'une pénétration de différentes zones, notamment en forme de bande et/ou décalées les unes des autres et/ou de tailles différentes et/ou de contours différents de l'ensemble d'interfaces, en particulier d'une pénétration d'au moins deux interfaces, décalées l'une de l'autre, de l'ensemble d'interfaces.

4. Dispositif de surveillance selon l'une des revendications précédentes, **caractérisé en ce que** les au moins deux rideaux de lumière (21, 22) sont décalés et/ou tournés l'un par rapport à l'autre.

5. Dispositif de surveillance selon l'une des revendications précédentes, **caractérisé en ce que** le paramètre dépend de la taille, de la vitesse et/ou de la position de l'objet, notamment de la distance de l'objet à l'ensemble de robots.

6. Dispositif de surveillance selon l'une des revendications précédentes, **caractérisé en ce que** les au moins deux réactions de sécurité différentes ont des vitesses, des poses, des trajectoires et/ou des arrêts différents de l'ensemble de robots et/ou des signaux d'avertissement différents d'un moyen de signalisation du dispositif de surveillance.

7. Procédé de surveillance d'une zone de travail d'un ensemble de robots comprenant au moins un robot à l'aide du module de surveillance selon l'une des revendications 1 à 6, ledit procédé comprenant les étapes suivantes :
- détecter un paramètre d'un objet lors de la pénétration d'un ensemble d'interfaces qui comporte au moins une interface ; et
- déclencher sélectivement (S100, S200, S300) une parmi au moins deux réactions de sécurité différentes de l'ensemble de robots sur la base du paramètre détecté.

8. Système comprenant un ensemble de robots comprenant au moins un robot (10) et un dispositif de surveillance destiné à surveiller une zone de travail (A) de l'ensemble de robots selon l'une des revendications 1 à 6.

9. Produit programme d'ordinateur comprenant un code de programme qui est stocké sur un support lisible par ordinateur pour mettre en œuvre un procédé selon la revendication 7.
